# EUROPÄISCHE PATENTSCHRIFT

(11) **EP 2 230 733 B1**
(45) Veröffentlichungstag und Bekanntmachung des Hinweises auf die Patenterteilung: **16.12.2015**
(21) Anmeldenummer: 09003929.8
(22) Anmeldetag: 19.03.2009
(51) Int. Cl.: H02B 1/048

(54) **Einbauadapter**
Built in adapter
Adaptateur d'intégration

(43) Veröffentlichungstag der Anmeldung: 22.09.2010
(73) Patentinhaber: SCHLEMMER GMBH, 85586 Poing (DE)
(72) Erfinder: Middelbeck, Olaf, 49377 Vechta (DE); Hentschel, Thomas, 08451 Crimmitschau (DE)
(74) Vertreter: Geyer, Fehners & Partner

(56) Entgegenhaltungen:
- EP-A- 1 533 821
- US-A- 4 400 672
- US-A- 4 731 925
- US-A1- 2008 011 930

## Beschreibung

Die vorliegende Erfindung betrifft einen Einbauadapter für die Montage eines Apparategehäuses, insbesondere eines Gehäuses nach DIN 43880, in einer Öffnung einer wand, zum Beispiel in einer Frontplatte eines Schaltkastens.

Apparategehäuse nach DIN 43880 haben eine quaderähnliche Form, mit einem frontseitigen Vorsprung, der im allgemeinen vorgesehen ist, um in einer Einbausituation in der Öffnung der Wand sichtbar zu bleiben, während der Rest der Vorderseite hinter der Wand verborgen ist, und einer sich quer über die Rückseite erstreckenden Aussparung, die eine Rückhalteplatte aufnehmen kann. Bei der Montage des Apparategehäuses wird der vorderseitige Vorsprung in die Öffnung der Wand eingefügt, und die Rückhalteplatte muss an der Wand in einem passenden Abstand zu dieser befestigt werden, um das Apparategehäuse an der Öffnung zu fixieren. Ohne geeignete Hilfsmittel ist die Befestigung der Rückhalteplatte an der wand mühsam und zeitaufwändig.

Ein Einbauadapter nach dem Oberbegriff des Anspruchs 1 für den Einbau eines Relais ist aus US-A-4 400 672 bekannt. Die Rückhalteplatte dieses herkömmlichen Einbauadapters ist durch zwei schmale, an einer Rückseite eines eingebauten Relais angreifende Vorsprünge von Widerhaken gebildet, die mit der Rahmenplatte über langgestreckte, den Körper des Relais flankierende Zungen verbunden sind. Wenn das Relais einem zu starken Druck auf seine Vorderseite ausgesetzt ist, können sich die Zungen verbiegen, so dass die Widerhaken abgleiten und das Relais seinen Halt verliert. In jedem Einbauadapter kann nur ein Relais montiert werden, so dass mehrere Relais an einer Wand nur in beträchtlichem Abstand voneinander montiert werden können.

Aufgabe der vorliegenden Erfindung ist, einen Einbauadapter für den Einbau eines Apparategehäuses in einer Wandöffnung anzugeben, der mit einer kleinen Zahl von preiswerten, schnell und einfach miteinander verbindbaren Einzelteilen auskommt und einen einfachen und sicheren Einbau der Apparategehäuse in der Wandöffnung ermöglicht.

Die Aufgabe wird gelöst, indem bei einem Einbauadapter für den Einbau eines Apparategehäuses in einer Öffnung einer Wand, mit einer an der Öffnung der Wand verankerbaren, ein zentrales Fenster umgebenden Rahmenplatte und einer sich in einer zur Rahmenplatte im wesentlichen parallelen Ebene erstreckenden ersten Rückhalteplatte, die aus einer mit dem zentralen Fenster wenigstens teilweise überlappenden Stellung in eine mit dem zentralen Fenster nicht überlappende Stellung auslenkbar ist, die Rückhalteplatte in der überlappenden Stellung durch einen aufgerasteten Bügel verriegelt ist. Durch Auslenken der ersten Rückhalteplatte wird der Weg freigemacht, um ein Apparategehäuse von hinten her am zentralen Fenster zu positionieren. Indem nach erfolgter Positionierung die Rückhalteplatte in ihre Ursprungsstellung zurück bewegt wird, wird das Apparategehäuse an dem Fenster fixiert. Der Bügel fungiert als eine Sicherung, die ein Abgleiten der Rückhalteplatte von der Rückseite eines montierten Apparategehäuses unterbindet. Er kann aber auch dazu dienen, drei oder mehr nebeneinander angeordnete Apparategehäuse in dem Einbauadapter zu fixieren, selbst wenn an nicht jedem dieser Gehäuse eine Rückhalteplatte anliegt.

Vorzugsweise ist die Rückhalteplatte durch ein Federelement in die mit dem zentralen Fenster überlappende Stellung beaufschlagt, so dass sie in diese nach einem Auslenken selbsttätig zurückkehrt.

Ein erster Arm, der die Rückhalteplatte mit der Rahmenplatte verbindet, kann zweckmäßigerweise elastisch biegsam sein, um als Federelement für die Rückstellbewegung der Rückhalteplatte zu dienen.

Vorzugsweise sind der erste Arm und ein eine zweite Rückhalteplatte tragender zweiter Arm an gegenüberliegenden Rändern des zentralen Fensters angeordnet. So kann ein einzelnes Gerätegehäuse, das an der Öffnung montiert werden soll, mit Hilfe von beiden Rückhalteplatten fixiert werden; denkbar ist aber auch, zwei Apparategehäuse nebeneinander an der Öffnung zu montieren, von denen eines durch die erste und das andere durch die zweite Rückhalteplatte fixiert ist.

Vorzugsweise laufen die Arme von der Rahmenplatte fort aufeinander zu. Wenn zwischen den Armen ein Apparategehäuse mit zueinander parallelen Seitenwänden platziert ist, dessen Breite dem Abstand der Arme in Höhe der Rückhalteplatte entspricht, dann sind die von der Rückhalteplatte abgewandten freien Enden der Arme, die die Rückhalteplatten tragen, durch das Apparategehäuse elastisch vorgespannt, was einen festen Sitz der Rückhalteplatten am Apparategehäuse begünstigt.

Ferner ist bevorzugt, dass die Arme jeweils zwei Streben umfassen, die von der Rahmenplatte jeweils benachbart zu Ecken des zentralen Fensters ausgehen. Dieser Aufbau gewährleistet bei geringem Materialaufwand eine hohe Torsionsfestigkeit der Arme und fördert ebenfalls den festen Sitz eines montierten Apparategehäuses.

Um eine Mehrzahl von Apparategehäusen zu sichern, weist der Bügel vorzugsweise eine Anlagefläche auf, die mit einer dem zentralen Fenster zugewandten Oberfläche der Rückhalteplatte bündig ist. Indem diese Oberfläche die Rückseite eines nicht von einer Rückhalteplatte erfassten Apparategehäuses berührt, ist dieses Gehäuse in gleicher weise an dem Einbauelement gesichert, als ob es direkt durch eine Rückhalteplatte berührt wäre.

Für den Einsatz bei Apparategehäusen nach DIN 43880 hat das Fenster der Rahmenplatte vorzugsweise eine Höhe von 45,0 mm bis 46,0 mm und eine Breite von n*17,5 mm bis n*18,0 mm, wobei n eine natürliche Zahl ist.

Um den festen Sitz eines solchen Apparategehäuses zu verbessern und weitgehend unabhängig von der Stärke der Wand zu machen, an der das Einbauelement montiert wird, ist zweckmäßigerweise an die Rahmenplatte ein das zentrale Fenster umgebender Schaft angeformt. Der Schaft kann insbesondere eine Länge von 4 bis 6 mm haben.

Zur Sicherung des Einbauadapters an der besagten Wand können insbesondere von der Rahmenplatte abstehende Stifte und auf die Stifte aufsteckbare Sperrscheiben dienen.

Die Stifte und die Arme stehen vorzugsweise von einer gleichen Seite der Rahmenplatte ab, so dass die Rahmenplatte an einer Sichtseite der Wand angebracht werden kann, wohingegen die durch Öffnungen der Wand hindurchgreifenden Stifte und Arme von der Rahmenplatte verdeckt und für einen Benutzer unsichtbar sind.

Gegenstand der Erfindung ist ferner eine Anordnung mit einem Einbauadapter wie oben beschrieben und wenigstens einem Apparategehäuse, von dem ein frontseitiger Vorsprung formschlüssig in dem zentralen Fenster des Einbauadapters aufgenommen ist und an dessen Rückseite wenigstens die erste Rückhalteplatte anliegt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine perspektivische Ansicht eines erfindungsgemäßen Einbauadapters;
- Fig. 2: einen Schnitt durch den Einbauadapter entlang der Linie II-II aus Fig. 1;
- Fig. 3: ein Bruchstück einer Wand, die für die Montage des Einbauadapters vorbereitet ist;
- Fig. 4: die Wand mit dem daran platzierten Einbauadapter sowie zur Fixierung des Einbauadapters dienende Sperrscheiben und ein in dem Adapter zu montierendes Apparategehäuse; und
- Fig. 5: einen zur Fig. 2 analogen Schnitt durch einen Einbauadapter mit drei Apparategehäusen gemäß einer weiterentwickelten Ausgestaltung der Erfindung.

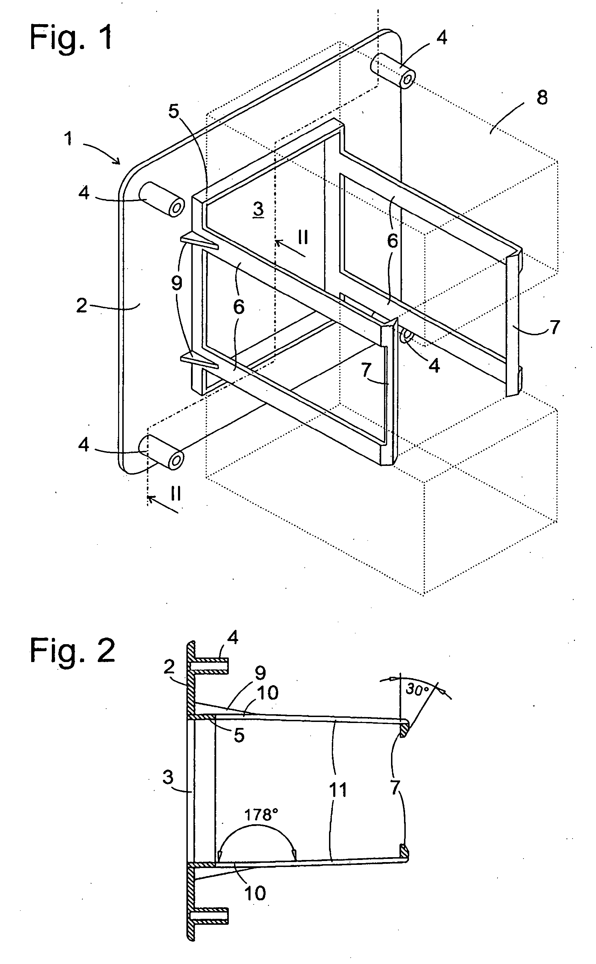

Fig. 1 zeigt eine perspektivische Ansicht des erfindungsgemäßen Einbauadapters gemäß einer ersten Ausgestaltung. Der aus Kunststoff einstückig spritzgeformte Einbauadapter 1 umfasst eine im wesentlichen ebene Rahmenplatte 2, die eine rechteckige zentrale Öffnung 3 umgibt. Die im eingebauten Zustand sichtbare Frontseite der Rahmenplatte 2 ist in Fig. 1 vom Betrachter abgewandt; sichtbar ist ihre Rückseite. Von dieser stehen benachbart zu ihren vier Ecken hohlzylindrische Stifte 4 ab. Die Stifte 4 können zum Beispiel einen Außendurchmesser von 4 mm und eine Länge von 10 mm haben. Ein die zentrale Öffnung 3 umgebender rechteckiger Schaft 5 hat eine Länge von 5 mm. Von dem Schaft 5 stehen an vier Stellen, jeweils benachbart zu den Ecken der Öffnung 3, Streben 6 ab, von denen jeweils zwei an ihren von der Rahmenplatte 2 abgewandten Enden gemeinsam eine Rückhalteplatte 7 tragen. Ein Apparategehäuse 8 - in Fig. 1 transparent dargestellt - ist an dem Adapter 1 in allen drei Raumrichtungen unbeweglich gehalten, indem seine Vorderseite das Ende des Schafts 5 berührt, die Rückhalteplatten 7 an der Rückseite des Apparategehäuses 8 anliegen und ein Vorsprung an der Vorderseite des Apparategehäuses 8 formschlüssig in den Schaft 5 eingreift.

In Kontakt mit parallelen Seitenwänden des Apparategehäuses 8 sind die Streben 6 geringfügig nach außen vorgespannt; im entspannten Zustand verlaufen die Streben 6 mit zunehmender Entfernung von der Rahmenplatte 2 leicht aufeinander zu, wie insbesondere in der Schnittdarstellung der Fig. 2 zu erkennen: die Streben 6 umfassen jeweils einen durch eine dreieckige Rippe 9 versteiften, zur Rahmenplatte 2 benachbarten Abschnitt 10, der auf der Rahmenplatte 2 exakt senkrecht steht, und einen von der Rahmenplatte 2 entfernten Abschnitt 11, der mit dem Abschnitt 10 einen Winkel von 178° aufspannt. Infolge der Vorspannung klemmen die Abschnitte 11 das Apparategehäuse 8, so dass allenfalls eine extrem starke Erschütterung dazu führen kann, dass eine Rückhalteplatte 7 vom Apparategehäuse 8 abgleitet.

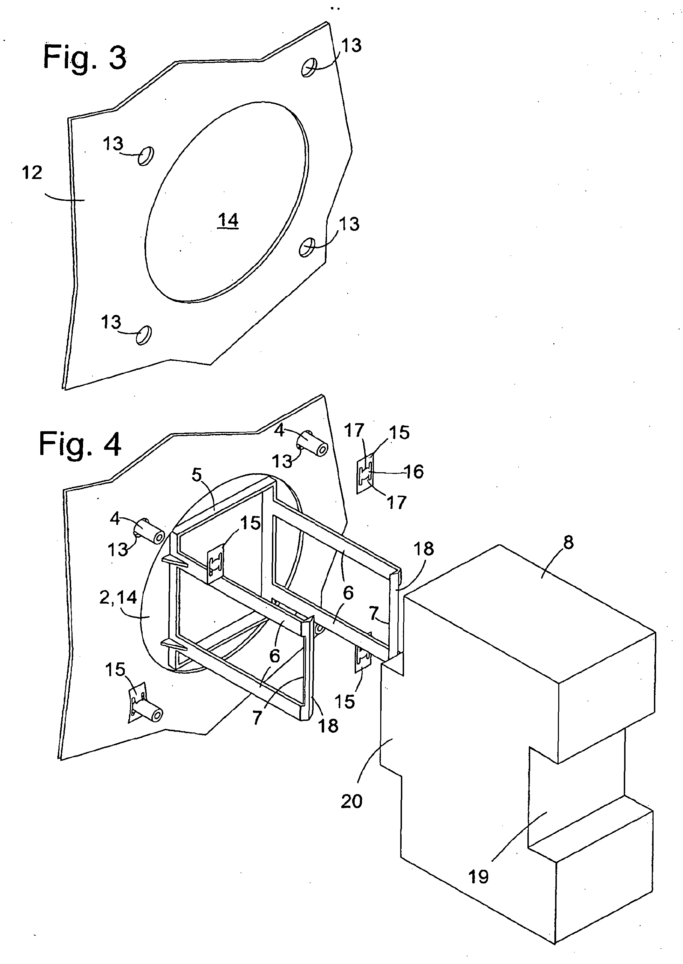

Die Montage des Apparategehäuses 8 wird anhand der Fig. 3 und 4 veranschaulicht. Fig. 3 zeigt ein Bruchstück einer Wand 12 wie etwa des Frontblechs eines Verteilerkastens, in dem das Gehäuse 8 mit Hilfe des Einbauadapters 1 montiert werden soll. In die Wand 12 sind in einer quadratischen Anordnung vier Bohrungen 13 eingebracht. Zentral zwischen den Bohrungen 13 ist ein großflächiges kreisrundes Fenster 14 geschnitten.

Wie in Fig. 4 zu sehen, nehmen die vier Bohrungen 13 die Stifte 4 des an einer Sichtseite der Wand 12 platzierten Einbauadapters 1 auf, während der Schaft 5 sich durch das Fenster 14 erstreckt. Wie man leicht sieht, gibt die Länge des Schafts 5 die maximale Stärke vor, die die Wand 12 haben darf: wäre sie stärker als der Schaft lang ist, dann könnte ein Apparategehäuse 8 mit seiner Vorderseite das Ende des Schafts nicht mehr berühren.

Zur Fixierung des Einbauadapters 1 an der Wand 12 dienen Sperrscheiben 15, die, wie am Beispiel des linken unteren Stiftes 4 gezeigt, auf die Stifte 4 aufgeschoben werden. Die Sperrscheiben 15 sind Zuschnitte aus Federstahl mit einer Öffnung 16, die geringfügig zu klein ist, um ohne eine Verformung der Sperrscheibe 15 einen Stift 4 passieren zu lassen. In die Öffnung 16 von den Seiten her hinein ragende biegsame Klauen 17 werden beim Aufstecken der Sperrscheiben 15 auf die Stifte 4 ausgelenkt, wodurch sich die Sperrscheibe 15 als ganzes verbiegt. Wenn die Ränder der Sperrscheibe 15 an der Wand 12 anliegen, ist der Adapter 1 an der Wand 12 unlösbar und spielfrei fixiert.

Um das Apparategehäuse 8 im Adapter 1 zu montieren, genügt es, es gegen die schrägen Facetten 18 an den Rückseiten der beiden Rückhalteplatten 7 zu drücken, um letztere elastisch zur Seite auszulenken. Die Länge der Streben 6 ist so bemessen, dass die Rückhalteplatten 7 von der Seite her in eine rückseitige Aussparung 19 des Apparategehäuses 8 einrücken, sobald ein Vorsprung 20 an dessen Vorderseite in den Schaft 5 eingeführt ist und die Vorderseite beiderseits des Vorsprungs 20 am Ende des Schafts 5 anliegt.

Anstelle eines einzigen Apparategehäuses 8, dessen Breite der Breite der zentralen Öffnung 3 von typischerweise 35 mm entspricht, können auch zwei Gehäuse von jeweils der halben Breite in dem in den Fig. 1, 2, 4 gezeigten Einbauadapter 1 montiert werden; in diesem Fall ist jedes Gehäuse 8 nur durch eine der zwei Rückhalteplatten 7 gehalten.

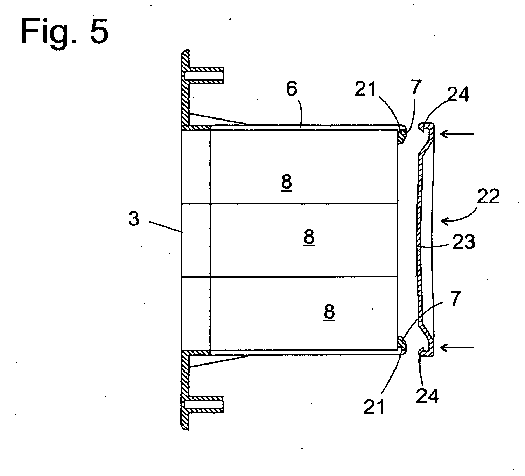

Um eine größere Zahl von Gehäusen 8 zu montieren, kann eine in Fig. 5 in einem zur Fig. 2 analogen Schnitt gezeigte Ausgestaltung des Einbauadapters 1 verwendet werden. Die zentrale Öffnung 3 ist hier von drei Apparategehäusen 8 mit jeweils 17,5 mm Breite ausgefüllt, von denen jeweils nur die beiden äußeren in Kontakt mit Rückhalteplatten 7 sind. An den voneinander abgewandten Rändern der zwei Rückhalteplatten 7 sind zwei Rastnuten 21 ausgespart, die vorgesehen sind, um einen Widerhaken 24 eines Spannbügels 22 aufzunehmen, der, wie in der Fig. 5 durch zwei Pfeile angedeutet, von hinten auf die Rückhalteplatten aufrastbar ist. Im in der Fig. 5 gezeigten isolierten Zustand ist ein mittlerer Abschnitt 23 des Spannbügels geringfügig zur Rahmenplatte 2 hin vorgewölbt. Wenn die Widerhaken 24 in den Rastnuten 21 im Eingriff sind, berührt dieser mittlere Abschnitt 23 die Rückseite des mittleren Apparategehäuses 8 und kommt so in einer Ebene mit den Vorderseiten der Rückhalteplatten 7 zu liegen. Die Vorspannung, unter der der Spannbügel 22 in diesem Zustand steht, sorgt für eine sichere und spielfreie Fixierung auch des mittleren Apparategehäuses 8 am Einbauadapter 1.

Grundsätzlich kann der Spannbügel 22 auch bei einem Einbauadapter geringerer Breite wie etwa demjenigen der Fig. 1, 2, 4 zum Einsatz kommen. Hier wird er zwar nicht zum Fixieren eines mittleren Apparategehäuses 8 benötigt, doch verhindert er zuverlässig ein Abgleiten der Rückhalteplatten 7 von einem montierten Apparategehäuse 8 und sorgt so für eine sehr sichere Verankerung eines montierten Apparategehäuses 8. Wenn der Spannbügel 22 verwendet wird, ist es nicht erforderlich, dass die Streben 6 eine Rückstellkraft auf die Rückhalteplatten 7 ausüben.

## Patentansprüche

1. Einbauadapter (1) für den Einbau eines Apparategehäuses (8) in einer Öffnung (14) einer Wand (12), mit einer an der Öffnung (14) der Wand (12) verankerbaren, ein zentrales Fenster (3) umgebenden Rahmenplatte (2) und einer sich in einer zur Rahmenplatte (2) im Wesentlichen parallelen Ebene erstreckenden ersten Rückhalteplatte (7), die aus einer mit dem zentralen Fenster (3) wenigstens teilweise überlappenden Stellung in eine mit dem zentralen Fenster (3) nicht überlappende Stellung auslenkbar ist, **dadurch gekennzeichnet, dass** die Rückhalteplatte (7) in der überlappenden Stellung durch einen aufgerasteten Bügel verriegelt (22) ist.

2. Einbauadapter nach Anspruch 1, **dadurch gekennzeichnet, dass** die Rückhalteplatte (7) durch ein Federelement (6) in die überlappende Stellung beaufschlagt ist.

3. Einbauelement nach Anspruch 1 oder 2, **dadurch gekennzeichnet, dass** die Rückhalteplatte (7) mit der Rahmenplatte (2) durch einen elastisch biegsamen ersten Arm (6) verbunden ist.

4. Einbauelement nach Anspruch 3, **dadurch gekennzeichnet, dass** der erste Arm (6) und ein eine zweite Rückhalteplatte (7) tragender zweiter Arm (6) an gegenüberliegenden Rändern des zentralen Fensters (3) angeordnet sind.

5. Einbauadapter nach Anspruch 4, **dadurch gekennzeichnet, dass** die Arme (6) von der Rahmenplatte (2) fort aufeinander zu laufen.

6. Einbauadapter nach Anspruch 4 oder 5, **dadurch gekennzeichnet, dass** die Arme jeweils zwei Streben (6) umfassen, die von der Rahmenplatte (2) benachbart zu Ecken des zentralen Fensters (3) ausgehen.

7. Einbauelement nach einem der vorhergehenden Ansprüche, **dadurch gekennzeichnet, dass** der Bügel (22) eine Anlagefläche aufweist, die mit einer dem zentralen Fenster (3) zugewandten Oberfläche der Rückhalteplatte in einer gleichen Ebene liegt.

8. Einbauadapter nach einem der vorhergehenden Ansprüche, **dadurch gekennzeichnet, dass** das Fenster (3) eine Höhe von 45,0 mm bis 46,0 mm und eine Breite von n*17,5 mm bis n*18,0 mm aufweist, wobei n eine natürliche Zahl ist.

9. Einbauadapter nach einem der vorhergehenden Ansprüche, **dadurch gekennzeichnet, dass** an die Rahmenplatte (2) ein das zentrale Fenster (3) umgebender Schaft (5) angeformt ist.

10. Einbauadapter nach Anspruch 9, **dadurch gekennzeichnet, dass** der Schaft (5) eine Länge von 4 bis 6 mm hat.

11. Einbauadapter nach einem der vorhergehenden Ansprüche, **gekennzeichnet durch** von der Rahmenplatte (2) abstehende Stifte (4) und auf die Stifte (4) aufsteckbare Sperrscheiben (15).

12. Einbauadapter nach Anspruch 11, **dadurch gekennzeichnet, dass** die Stifte (4) und die Arme (6) von einer gleichen Seite der Rahmenplatte (2) abstehen.

13. Anordnung mit einem Einbauadapter (1) nach einem der vorhergehenden Ansprüche und wenigstens einem Apparategehäuse (8), **dadurch gekennzeichnet, dass** ein frontseitiger vorsprung (20) des Apparategehäuses (8) formschlüssig in dem zentralen Fenster (3) aufgenommen ist und wenigstens die erste Rückhalteplatte (7) an einer Rückseite (19) des Apparategehäuses (8) anliegt.

## Claims

1. Installation adapter (1) for the installation of an apparatus housing (8) in an opening (14) of a wall (12), having a frame plate (2) surrounding a central window (3) which can be anchored to the opening (14) of the wall (12) and a first retaining plate (7) extending in a plane substantially parallel to the frame plate (2), said retaining plate being capable of deflection out of a position at least partially overlapping the central window (3) into a position not overlapping the central window (3), **characterised in that** the retaining plate (7) is locked in the overlapping position by a snap-fit clip (22).

2. Installation adapter according to claim 1, **characterised in that** the retaining plate (7) is impinged in the overlapping position by a spring element (6).

3. Installation element according to claim 1 or 2, **characterised in that** the retaining plate (7) is joined to the frame plate (2) by an elastically flexible first arm (6).

4. Installation element according to claim 3, **characterised in that** the first arm (6) and a second arm (6) bearing a second retaining plate (7) are arranged on opposing edges of the central window (3).

5. Installation adapter according to claim 4, **characterised in that** the arms (6) run towards each other away from the frame plate (2).

6. Installation adapter according to claim 4 or 5, **characterised in that** the arms each comprise two struts (6) which extend from the frame plate (2) adjacent to corners of the central window (3).

7. Installation element according to one of the preceding claims, **characterised in that** the clip (22) has a contact surface which lies in an identical plane to the surface of the retaining plate directed towards the central window (3).

8. Installation adapter according to one of the preceding claims, **characterised in that** the window (3) has a height of 45.0 mm to 46.0 mm and a width of n*17.5 mm to n*18.0 mm, where n is a natural number.

9. Installation adapter according to one of the preceding claims, **characterised in that** a shaft (5) surrounding the central window (3) is integrally joined to the frame plate (2).

10. Installation adapter according to claim 9, **characterised in that** the shaft (5) has a length of 4 to 6 mm.

11. Installation adapter according to one of the preceding claims, **characterised by** pins (4) protruding from the frame plate (2) and lock washers (15) which can be slipped onto the pins (4).

12. Installation adapter according to claim 11, **characterised in that** the pins (4) and the arms (6) protrude from a same side of the frame plate (2).

13. Arrangement having an installation adapter (1) according to one of the preceding claims and at least one apparatus housing (8), **characterised in that** a front side projection (20) of the apparatus housing (8) is accommodated in a form-fitting manner in the central window (3) and at least the first retaining plate (7) rests on a rear side (19) of the apparatus housing (8).

## Revendications

1. Adaptateur encastrable (1) pour l'encastrement d'un boîtier d'appareil (8) dans une ouverture (14) d'une paroi (12), comportant une plaquette d'encadrement (2), destinée à être fixée sur l'ouverture (14) de la paroi (12) et entourant une fenêtre (3) centrale, et une première plaquette de retenue (7), qui s'étend dans un plan sensiblement parallèle à la plaquette d'encadrement (2) et qui peut être déplacée à partir d'une position se superposant au moins partiellement à la fenêtre (3) centrale vers une position ne se superposant pas à la fenêtre (3) centrale, **caractérisé en ce que**, dans la position en superposition, la plaquette de retenue (7) est verrouillée par un étrier (22) encliqueté.

2. Adaptateur encastrable selon la revendication 1, **caractérisé en ce que** la plaquette de retenue (7) est sollicitée dans la position en superposition par un élément de ressort (6).

3. Élément encastrable selon la revendication 1 ou 2, **caractérisé en ce que** la plaquette de retenue (7) est reliée à la plaquette d'encadrement (2) par un premier bras (6) élastiquement flexible.

4. Élément encastrable selon la revendication 3, **caractérisé en ce que** le premier bras (6) et un deuxième bras (6) portant une deuxième plaquette de retenue (7) sont disposés sur des bords opposés de la fenêtre (3) centrale.

5. Adaptateur encastrable selon la revendication 4, **caractérisé en ce que** les bras (6) convergent l'un vers l'autre en s'écartant de la plaquette d'encadrement (2).

6. Adaptateur encastrable selon la revendication 4 ou 5, **caractérisé en ce que** les bras comportent chacun deux traverses (6) qui partent de la plaquette d'encadrement (2) au voisinage des coins de la fenêtre (3) centrale.

7. Élément encastrable selon l'une quelconque des revendications précédentes, **caractérisé en ce que** l'étrier (22) comporte une surface d'appui qui se situe dans le même plan qu'une surface, orientée vers la fenêtre (3) centrale, de la plaquette de retenue.

8. Adaptateur encastrable selon l'une quelconque des revendications précédentes, **caractérisé en ce que** la fenêtre (3) a une hauteur de 45,0 mm à 46,0 mm et une largeur de n*17,5 mm à n*18,0 mm, n étant un nombre naturel.

9. Adaptateur encastrable selon l'une quelconque des revendications précédentes, **caractérisé en ce que** sur la plaquette d'encadrement (2) est formée une tige (5) entourant la fenêtre (3) centrale.

10. Adaptateur encastrable selon la revendication 9, **caractérisé en ce que** la tige (5) a une longueur de 4 à 6 mm.

11. Adaptateur encastrable selon l'une quelconque des revendications précédentes, **caractérisé par** des tétons (4) en saillie sur la plaquette d'encadrement (2) et par des disques de blocage (15) enfichables sur les tétons (4).

12. Adaptateur encastrable selon la revendication 11, **caractérisé en ce que** les tétons (4) et les bras (6) sont en saillie sur un même côté de la plaquette d'encadrement (2).

13. Ensemble comportant un adaptateur encastrable (1) selon l'une des revendications précédentes et au moins un boîtier d'appareil (8), **caractérisé en ce qu'**une saillie frontale (20) du boîtier d'appareil (8) est logée par conjugaison de forme dans la fenêtre (3) centrale, et au moins la première plaquette de retenue (7) est en appui contre une face arrière (19) du boîtier d'appareil (8).
